# EUROPÄISCHE PATENTSCHRIFT

(11) **EP 3 384 356 B1**
(45) Veröffentlichungstag und Bekanntmachung des Hinweises auf die Patenterteilung: **29.06.2022**
(21) Anmeldenummer: 16806061.4
(22) Anmeldetag: 02.12.2016
(51) Int. Cl.: G05B 19/418, H04L 12/02, H04L 12/40

(54) **VORRICHTUNG ZUR KOPPLUNG ZWEIER BUSSYSTEME**
DEVICE FOR COUPLING TWO BUS SYSTEMS
DISPOSITIF POUR COUPLER DEUX SYSTÈMES DE BUS

(30) Priorität: 03.12.2015 DE 102015121104
(43) Veröffentlichungstag der Anmeldung: 10.10.2018
(73) Patentinhaber: Phoenix Contact GmbH & Co. KG, 32825 Blomberg (DE)
(72) Erfinder: HOFFMANN, Michael, 32657 Lemgo (DE)
(74) Vertreter: Blumbach · Zinngrebe Patentanwälte PartG mbB
(86) Internationale Anmeldenummer: PCT/EP2016/079650
(87) Internationale Veröffentlichungsnummer: WO 2017/093521

(56) Entgegenhaltungen:
- WO-A1-2009/013726
- DE-A1-102004 007 746
- US-A1- 2006 047 480

## Beschreibung

Die vorliegende Erfindung betrifft das Gebiet der Kopplung zweier Bussysteme.

In modernen Kommunikations- und Steuerungssystemen können zur Datenübertragung oder zur Steuerung unterschiedliche Feldbussysteme eingesetzt werden, die häufig miteinander gekoppelt werden müssen, wobei zwischen einem überlagerten Bussystem und einem unterlagerten Bussystem unterschieden werden kann. Das überlagerte Bussystem ist dasjenige Bussystem, das mit einem Steuerungssystem verbunden ist. Das unterlagerte Bussystem ist hingegen dasjenige Bussystem, das mit dem überlagerten Bussystem gekoppelt werden muss. In diesem Zusammenhang entsteht das Problem, Daten von dem einen Bussystem möglichst ohne zeitliche Verluste in das andere Bussystem zu übernehmen bzw. zu übertragen. Darüber hinaus müssen typischerweise Teile der Daten, z.B. Header-Informationen, nach vordefinierten Vorschriften verändert werden, um die Kompatibilität der Daten eines Bussystems für das jeweils andere Bussystem zu gewährleisten. Die Vorschriften zur Veränderung der Daten werden dabei häufig durch eine fest eingerichtete Software, mitunter auch durch eine fest verdrahtete Hardware abgearbeitet, um eine besonders effiziente Datenübertragung zu ermöglichen. Dies führt jedoch zu eingeschränkter Flexibilität bei der Datenverarbeitung.

Die DE 2010 020 446 B4 offenbart ein Automatisierungsgerät mit Mitteln zur Umsetzung der von einem Feldbus kommenden Datenpakete in einen Datenstrom für einen lokalen Bus und zur Umsetzung des vom lokalen Bus an das Automatisierungsgerät gerichteten Datenstroms in Datenpakete für den Feldbus. Das Automatisierungsgerät hat eine Beschleunigungseinheit zur Selektion beschleunigt umzusetzender Prozessdaten und zur gesonderten Umsetzung der selektierten Prozessdaten, die derart eingerichtet ist, dass die selektierten Prozessdaten zeitlich vor im Verbund mit den selektierten Prozessdaten mit übertragenen, nicht selektierten Prozessdaten ausgegeben werden. Hierzu ist das Automatisierungsgerät zur Verarbeitung der nicht selektierten Prozessdaten mittels Software auf einem Microcontroller in an sich bekannter Weise eingerichtet, während die selektierten Prozessdaten mittels Hardwarelogik verarbeitet werden. Hierbei erfolgt die Verarbeitung der Daten nach fest vorgegebenen Regeln.

Die DE 10 2008 019 277 B4 derselben Anmelderin zeigt eine Datenübertragungsvorrichtung zur Übertragung von Daten zwischen einem ersten Bussystem und einem zweiten Bussystemen ohne Verwendung eines Prozessors nach Initialisierung entsprechender Speicher mit einer Kopiertabelle zum Bereitstellen einer umsortierten Ausgabereihenfolge von Daten des ersten Bussystems und einer fest verdrahteten oder fest programmierten Übertragungseinrichtung zum Übertragen der Daten zwischen dem ersten Bussystem und dem zweiten Bussystem gemäß der umsortierten Ausgabereihenfolge. Die Verarbeitung der Daten ist bei diesem hardwaregestützten Übertragungskonzept zwar besonders effizient, jedoch hinsichtlich der Flexibilität weiterhin steigerungsfähig.

Die US 2006/0047480 A1 beschreibt ein Diagnoseverfahren für ein Temperaturmesssystem mit einem Temperatursensor, einem mit dem Sensor verbundenen Feldverarbeitungsmodul, einem Bitbus, einem Feldbus und einem Hilfsverarbeitungsmodul, das mit dem Bitbus und dem Feldbus kommuniziert. Das Hilfsverarbeitungsmodul umfasst einen Hilfsmodulprozessor, einen Hilfsmodulspeicher, eine Hilfsdiagnosekomponente, eine Hilfsgatewaykomponente und eine Protokollkonverterkomponente, die eine Umwandlung vom Bitbus zum Feldbusformat durchführen kann.

Die Aufgabe der vorliegenden Erfindung ist die Schaffung eines effizienten und zugleich flexiblen und modularen Konzepts zur Veränderung von Daten bei der Kopplung zweier Bussysteme.

Diese Aufgabe wird durch die Gegenstände der unabhängigen Ansprüche gelöst. Vorteilhafte Ausführungsformen sind Gegenstände der abhängigen Ansprüche.

Erfindungsgemäß wird eine Vorrichtung zur Kopplung eines ersten Bussystems mit einem zweiten Bussystem bereitgestellt, welche hergerichtet ist, um zwischen dem ersten Bussystem und dem zweiten Bussystem bidirektional zu vermitteln.

Die Kopplungsvorrichtung umfasst eine Datenübertragungseinrichtung zur Übertragung von Daten von dem ersten Bussystem zu dem zweiten Bussystem, welche nachfolgend als vorwärtsgerichtete Daten bezeichnet werden, und zur Übertragung von Daten von dem zweiten Bussystem zu dem ersten Bussystem, welche nachfolgend als rrückwärtsgerichtete Daten bezeichnet werden.

Ferner umfasst die Kopplungsvorrichtung eine Datenmanipulationseinrichtung zur Manipulation von vorwärtsgerichteten Daten und/oder rückwärtsgerichteten Daten und zeichnet sich durch einen Anweisungsspeicher zur Speicherung von Manipulationsanweisungen aus, welche die Manipulation von Daten durch die Datenmanipulationseinrichtung betreffen, wobei die Manipulationsanweisungen in den Anweisungsspeicher nachladbar sind.

Die Datenübertragungseinrichtung und die Datenmanipulationseinrichtung können dabei in einer Hardware-Einheit umfasst sein.

Es ist nun insbesondere vorgesehen, dass die Manipulationsanweisungen z.B. durch einen Benutzer der Vorrichtung insbesondere modulartig in den Anweisungsspeicher nachladbar sind. Dies ermöglicht ein besonders hohes Maß an Flexibilität hinsichtlich der Manipulation der Daten.

Die Manipulationsanweisungen können beispielsweise fabrikseitig vorgegeben und benutzerseitig veränderbar sein. Es kann beispielsweise ein Update-Mechanismus vorgesehen sein. Es kann auch vorgesehen sein, dass zumindest Teile der Manipulationsanweisungen nachträglich austauschbar sind. Es kann z.B. flexibler Programmcode durch einen Benutzer nachladbar sein. Insbesondere können Apps (Applikationen) flexibel nachladbar sein.

Es wird somit eine Möglichkeit geschaffen, Applikationen zur Datenverarbeitung, insbesondere zur Prozessdatenverarbeitung, als nachladbare Funktionen, sog. Apps, in die Kopplungsvorrichtung zu laden. Als Funktionen können z.B. realisiert werden: Counter-Funktionen, Reflex-Funktionen (verschiedene Eingangszustände führen zu einem bestimmten Ausgangszustand), Timestamping oder Oversampling von Prozessdaten mit Daten aus Standard-Feldbusmodulen, Event-Auswertung, Regelfunktionen, etc.

Das flexible Nachladen kann beispielsweise über eine insbesondere dediziert dafür vorgesehene Schnittstelle ermöglicht werden.

Der Buskoppler kann z.B. eine Hardware-Einheit umfassen, die es erlaubt, flexiblen Programm-Code in die Hardware-Einheit zu laden, der dann abgearbeitet werden kann. Die Hardware-Einheit hat vorzugsweise Zugriff auf (Prozess-)Daten und kann diese gezielt manipulieren bzw. erweitern. In vorteilhafter Weise können somit insbesondere verschiedene Funktionen realisiert werden, die als Programmcode nachgeladen werden können, ohne den übrigen Ablauf des Buskopplers zu stören.

Die verarbeiteten (Prozess-)Daten können beispielsweise als neue Daten zu dem überlagerten Feldbus z.B. als neues Modul übertragen werden oder aber direkt auf einen angeschlossenen Feldbus-Teilnehmer ausgegeben werden.

Der (Prozess-)Datenaustausch kann beispielsweise immer in speziellen Hardware-Komponenten stattfinden, die die Reaktionszeiten des (Prozess-)Datenaustauschers nicht beeinflussen. Der Buskoppler kann somit insbesondere (Prozess-)Daten verarbeiten ohne den normalen (Prozess-)Datenaustausch zu stören, zu verlangsamen oder die Reaktionszeiten des Buskopplers zu beeinflussen.

Es kann beispielsweise vorgesehen sein, Hardware-Komponenten einzusetzen, die dafür sorgen, dass der Datenfluss nicht von Prozessoren abhängt. Auch kommt es in Betracht, dass die Kopplungsvorrichtung, insbesondere die Hardware-Einheit, einen dedizierten Prozessor umfasst, welcher für die Abarbeitung nachgeladener Manipulationsanweisungen zuständig ist.

Somit wird vermieden, dass (Prozess-)Daten über den bzw. einen schon vorhandenen Prozessor abgearbeitet werden, der auch schon das Handling der üblichen Aufgaben in einem Buskoppler abarbeiten muss und deshalb nicht immer schnell und ohne Verzögerung die neuen Aufgaben abarbeiten kann.

Prinzipiell können die Funktionen bzw. Apps auch in spezielle FPGA-Designs (FPGA: **F**ield **P**rogrammable **G**ate **A**rray bzw. im Feld, d.h. vor Ort, beim Kunden, programmierbare (Logik-)Gatter-Anordnung) nachgeladen werden, welche dann die Zusatzfunktionen bereitstellen. Hierzu können verschiedene Funktionsdesigns im FPGA angeboten werden, die dann über einen Update-Mechanismus in den Buskoppler geladen werden können. Jedes FPGA-Design kann dabei spezielle Funktionen zur Verfügung stellen.

Universeller ist demgegenüber allerdings insbesondere die Variante, bei welcher flexibler Programmcode in den Buskoppler geladen werden kann.

Erfindungsgemäß ist ferner vorgesehen, dass die Kopplungsvorrichtung eine Anweisungsausführungseinrichtung zur Ausführung der Manipulationsanweisungen und Erzeugung von Manipulationsdaten umfasst sowie einen Manipulationsdatenpuffer zur Zwischenspeicherung erzeugter Manipulationsdaten für die Datenmanipulationseinrichtung.

Die Anweisungsausführungseinrichtung und/oder der Manipulationsdatenpuffer kann dabei in der Hardware-Einheit umfasst sein. Die Anweisungsausführungseinrichtung kann z.B. als eine FPGA und/oder als ein Prozessor ausgebildet sein. Die Anweisungsausführungseinrichtung kann insbesondere lediglich zur Ausführung der Manipulationsanweisungen vorgesehen sein.

Ferner ist gemäß der Erfindung vorgesehen, dass die Datenmanipulationseinrichtung ausgebildet ist, die im Manipulationsdatenpuffer zwischengespeicherten Manipulationsdaten mit vorwärtsgerichteten und/oder rückwärtsgerichteten Daten zu verknüpfen, insbesondere zumindest Teile vorwärtsgerichteter und/oder rückwärtsgerichteter Daten mit Manipulationsdaten zu überschreiben. Manipulationsdaten können z.B. auch den Daten vorangestellt oder angehängt werden.

Auch beziehen sich gemäß der Erfindung die Manipulationsanweisungen auf vorwärtsgerichtete und/oder rückwärtsgerichtete Daten. Entsprechend ist die Anweisungsausführungseinrichtung eingerichtet, auf die entsprechenden vorwärtsgerichtete und/oder rückwärtsgerichtete Daten zuzugreifen, um die sich darauf beziehenden Manipulationsanweisungen auszuführen.

Es kann dabei insbesondere vorgesehen sein, dass die Manipulationsanweisungen sich auf aktuelle Daten beziehen, insbesondere auf Daten aus dem letzten Zyklus z.B. des überlagerten Bussystems sich beziehen.

Es kann aber beispielsweise auch vorgesehen sein, dass die Manipulationsanweisungen sich auf vorwärtsgerichtete und/oder rückwärtsgerichtete Daten von einem vorherigen Zeitpunkt beziehen, z.B. auf Daten von einem vorherigen Buszyklus sich beziehen. Dies kann beispielsweise dadurch ermöglicht werden, indem Daten in einem mehrfach (z.B. 3-fach) Wechselpuffer stehen.

Gemäß einer Ausführungsform der Erfindung umfasst die Kopplungsvorrichtung einen dem ersten Bussystem zugeordneten Ausgangsdatenpuffer zur Zwischenspeicherung von vorwärtsgerichteten Daten und einem dem ersten Bussystem zugeordneten Eingangsdatenpuffer zur Zwischenspeicherung von rückwärtsgerichteten Daten. Die beiden Puffer sind insbesondere unmittelbar mit dem überlagerten Bus verknüpft und können z.B. Prozessdaten Zwischenspeichern.

Ferner ist in dieser Ausführungsform die Datenübertragungseinrichtung und/oder die Datenmanipulationseinrichtung ausgebildet, auf den Ausgangspuffer und/oder den Eingangspuffer zuzugreifen, um vorwärtsgerichtete und/oder rückwärtsgerichtete Daten zu übertragen bzw. zu manipulieren.

Der Ausgangsdatenpuffer und/oder der Eingangsdatenpuffer kann dabei in der Hardware-Einheit umfasst sein.

Gemäß einer Ausführungsform der Erfindung ist die Anweisungsausführungseinrichtung ausgebildet, auf den Ausgangspuffer und/oder den Eingangspuffer zuzugreifen, um auf vorwärtsgerichtete Daten sich beziehende Manipulationsanweisungen auszuführen bzw. Manipulationsdaten in den Eingangspuffer einzuspeisen.

Es kann demnach beispielsweise vorgesehen sein, Manipulationsdaten für zukünftig zu modifizierende vorwärtsgerichtete Daten in den Manipulationsdatenpuffer zu schreiben und/oder Ausgangsdaten der Anweisungsausführungseinrichtung als rückwärtsgerichtete Daten in den Eingangspuffer des ersten Bussystems zu schreiben.

Gemäß einer Ausführungsform der Erfindung ist die Datenmanipulationseinrichtung ausgebildet, Manipulationsdaten mit vorwärtsgerichteten oder rückwärtsgerichteten Daten derart zu verknüpfen, dass diese Manipulationsdaten von dem zweiten bzw. ersten Bussystem zunächst unverarbeitet übertragen werden und zu einem späteren Zeitpunkt, insbesondere zu einem nachfolgenden Buszyklus, als manipulierte rückwärtsgerichtete bzw. vorwärtsgerichtete Daten für das erste bzw. zweite Bussystem wiederkehren.

Es kann demnach beispielsweise auch vorgesehen sein, dass die Datenmanipulationseinrichtung lediglich zur Manipulation von Daten in einer Richtung ausgebildet ist, die Manipulationsdaten aber sowohl das erste als auch das zweite Bussystem betreffen. Beispielsweise kann die Datenmanipulationseinrichtung lediglich zur Manipulation von Daten in Vorwärtsrichtung ausgebildet sein. Dann können Daten für die Rückwärtsrichtung beispielsweise mit der Datenmanipulationseinrichtung erzeugt werden, indem mehr Daten im unterlagerten Bussystem übertragen werden, als Daten im Bus verarbeitet werden.

Gemäß einer Ausführungsform der Erfindung umfasst die Kopplungsvorrichtung eine Kopiertabelle zum Bereitstellen einer Umsortierreihenfolge für vorwärtsgerichtete und/oder rückwärtsgerichtete Daten.

Die Kopiertabelle kann dabei in der Hardware-Einheit umfasst sein.

Gemäß einer Ausführungsform der Erfindung ist die Übertragungseinrichtung ausgebildet, vorwärtsgerichtete Daten, insbesondere aus dem Ausgangsdatenpuffer, gemäß der Umsortierreihenfolge umzusortieren und an das zweite Bussystem zu übertragen. Die Übertragung an das zweite Bussystem kann beispielsweise ohne Zwischenspeicherung erfolgen.

Gemäß einer Ausführungsform der Erfindung ist die Übertragungseinrichtung ausgebildet, rückwärtsgerichtete Daten gemäß der Umsortierreihenfolge umzusortieren und an das erste Bussystem, insbesondere an den Eingangsdatenpuffer, zu übertragen.

Gemäß einer Ausführungsform der Erfindung umfasst die Kopiertabelle erweiterte Informationen, insbesondere ein erweitertes Bit, welches angibt, ob ein jeweiliges Datum durch die Datenmanipulationseinrichtung zu manipulieren ist.

Gemäß einer Ausführungsform der Erfindung umfasst die Kopplungsvorrichtung einen Anweisungsausführungspuffer zur Zwischenspeicherung von Daten, welche gemäß einem erweiterten Bit zu manipulieren sind.

Der Anweisungsausführungspuffer kann in der Hardware-Einheit umfasst sein.

Gemäß einer Ausführungsform der Erfindung ist die Anweisungsausführungseinrichtung ausgebildet, auf den Anweisungsausführungspuffer zuzugreifen.

Gemäß einer Ausführungsform der Erfindung arbeitet die Anweisungsausführungseinrichtung die Kopiertabelle ab, insbesondere nachdem ein Zyklus des ersten und/oder zweiten Bussystems vollendet ist.

Gemäß einer Ausführungsform der Erfindung umfasst die Kopplungsvorrichtung einen Maskenpuffer zur Speicherung einer Bitmaske, welche angibt, welche Teile vorwärtsgerichteter und/oder rückwärtsgerichteter Daten von der Datenmanipulationseinrichtung zu manipulieren sind.

Der Maskenpuffer kann in der Hardware-Einheit umfasst sein.

Gemäß einer Ausführungsform der Erfindung umfasst die Kopplungsvorrichtung einen Prozessor, welcher ausgebildet ist, den Anweisungsspeicher mit den Manipulationsanweisungen zu initialisieren und/oder die Kopiertabelle mit der Umsortierreihenfolge und mit erweiterten Informationen, falls die Kopiertabelle erweiterte Informationen umfasst, zu initialisieren.

Die Erfindung betrifft ferner ein Verfahren zur Kopplung eines ersten Bussystems mit einem zweiten Bussystem, um zwischen dem ersten Bussystem und dem zweiten Bussystem bidirektional zu vermitteln.

Das erfindungsgemäße Verfahren umfasst die folgenden Schritte. (a) Nachladen von Manipulationsanweisungen in einen Anweisungsspeicher. (b) Speicherung der Manipulationsanweisungen in dem Anweisungsspeicher, wobei die Manipulationsanweisungen sich auf vorwärtsgerichtete und/oder rückwärtsgerichtete Daten beziehen. (c) Übertragung von Daten zwischen dem ersten und dem zweiten Bussystem mittels einer Datenübertragungseinrichtung. (d) Zugreifen auf vorwärtsgerichtete und/oder rückwärtsgerichtete Daten und Ausführen der sich auf diese Daten beziehenden Manipulationsanweisungen mittels einer Anweisungsausführungseinrichtung sowie Manipulation von Daten gemäß den Manipulationsanweisungen mittels einer Datenmanipulationseinrichtung.

Die Erfindung betrifft ferner eine programmtechnisch eingerichtete Vorrichtung mit einem Computer-Programm zum Ausführen des erfindungsgemäßen Verfahrens.

Die Erfindung betrifft schließlich ein Computer-Programm zum Durchführen des erfindungsgemäßen Verfahrens, wenn das Computer-Programm auf einem Computer abläuft.

Weitere Ausführungsbeispiele der Erfindung werden Bezug nehmend auf die beigefügten Zeichnungen näher erläutert. Es zeigen:
Fig. 1: eine Vorrichtung zur Kopplung zweiter Bussysteme in abstrakter Darstellung,
Fig. 2: eine Vorrichtung mit stark vereinfachtem Ablaufschema zur Kopplung zweiter Bussysteme in einer beispielhaften Ausführungsform,
Fig. 3: eine erste und zweite Reihenfolge von Daten und eine dazugehörige Kopiertabelle.

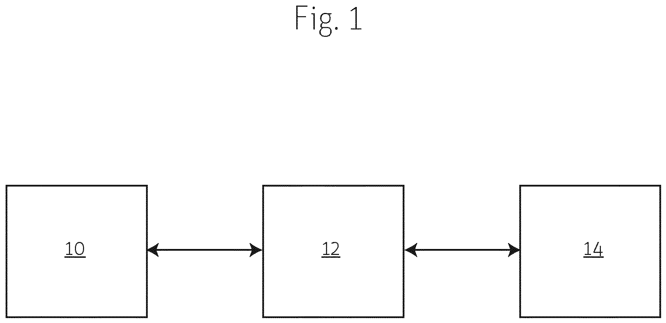

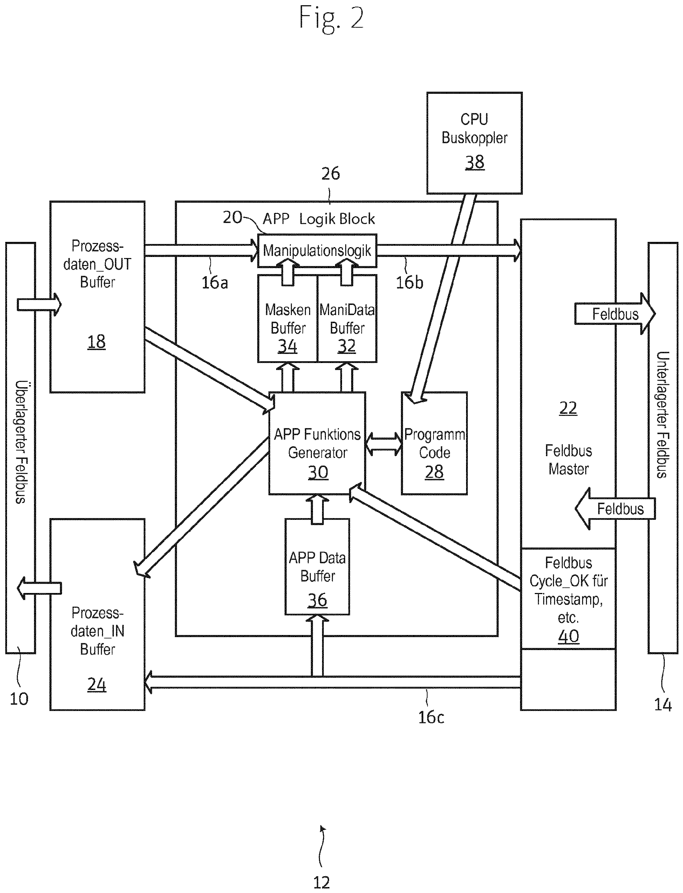

Bezugnehmend auf Fig. 1 und Fig. 2 vermittelt die Kopplungsvorrichtung 12 zwischen einem ersten Bussystem 10 und einem zweiten Bussystem 14, wobei die Kopplungsvorrichtung 12 in beide Richtungen vermittelt.

Die in Fig. 2 dargestellte Kopplungsvorrichtung 12 umfasst eine Datenübertragungseinrichtung, welche Übertragungskanäle 16a, 16b und 16c umfasst. Der Übertragungskanal 16a ermöglicht eine Datenübertragung von einem Ausgangsdatenpuffer 18 des ersten, insbesondere überlagerten Bussystems 10, insbesondere eines Feldbusses, zu einer Datenmanipulationseinrichtung 20. Der Übertragungskanal 16b ermöglicht eine Übertragung von Daten zum Feldbusmaster 22 des zweiten, insbesondere unterlagerten Bussystems 14. Die Datenübertragung über die Kanäle 16a und 16b von dem überlagerten Bus 10 zu dem unterlagerten Bus 14 kann z.B. als Vorwärtsrichtung definiert sein, dann sind die entlang dieser Kanäle übertragenen Daten sog. vorwärtsgerichtete Daten. Die somit als Buskoppler fungierende Kopplungsvorrichtung 12 ist gemäß Fig. 2 darüber hinaus als Feldbuskoppler eingerichtet.

Rückwärtsgerichtete Daten entsprechen dann Daten von dem unterlagerten Bus 14 zu dem überlagerten Bus 10 und werden über den Übertragungskanal 16c geleitet. Die rückwärtsgerichteten Daten können z.B. zunächst in einen Eingangsdatenpuffer 24 des überlagerten Bussystems 10 eingespeist werden. Von dort gelangen die Daten zum überlagerten Feldbus 10.

Die Datenmanipulationseinrichtung 20 und die Datenübertragungseinrichtung mit den Kanälen 16a, 16b und 16c sind gemäß Beispiel nach Fig. 2 in einer Hardwareeinheit 26 umfasst, welche in der Abbildung als "APP Logik Block" bezeichnet ist. Die Hardwareeinheit 26 umfasst ferner einen Anweisungsspeicher 28, eine Anweisungsausführungseinrichtung 30, einen Manipulationsdatenpuffer 32, welcher insbesondere als ein Wechselpuffer ausgebildet sein kann, einen

Maskenpuffer 34 und einen Anweisungsausführungspuffer 36.

Die Kopplungsvorrichtung 12 zeichnet sich im Rahmen der Erfindung durch nachladbare Modulfunktionen zur Prozessdatenverarbeitung bzw. das Nachladen von Apps in die Kopplungsvorrichtung 12 aus. Es können somit Manipulationsanweisungen durch einen Benutzer bevorzugt in den Anweisungsspeicher 28 modular nachgeladen werden.

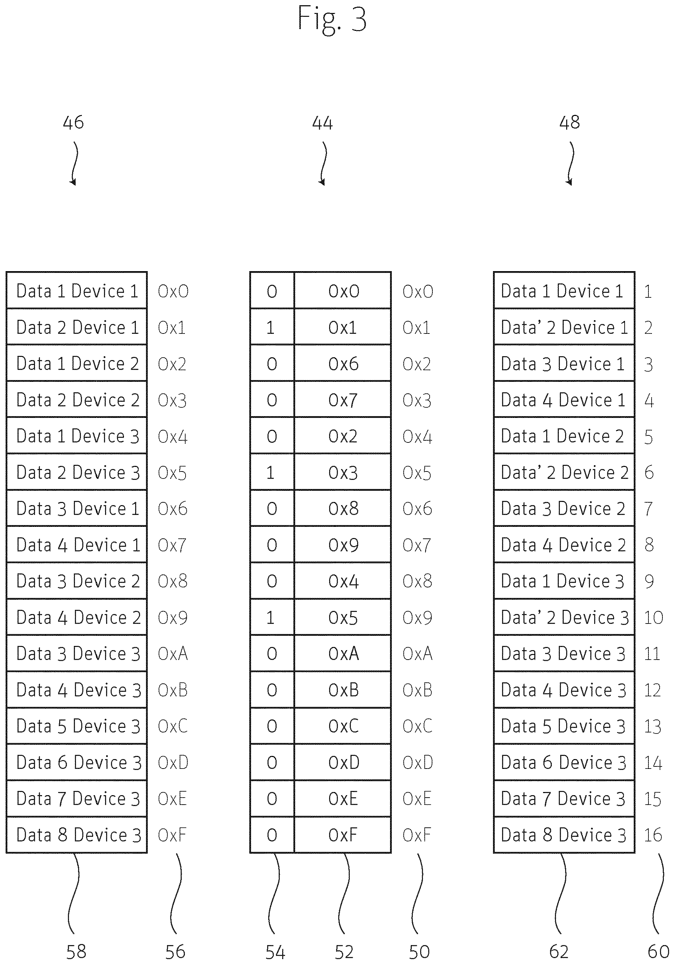

Eine Initialisierungsphase kann z.B. wie folgt realisiert sein: Der Prozessor 38 der Kopplungsvorrichtung 12 lädt Manipulationsanweisungen z.B. in Form von Programmcode in den Anweisungsspeicher 28. Die Anweisungsausführungseinrichtung 30 füllt entsprechend der Vorgaben aus dem Programmcode den Maskenpuffer 34. Ferner werden z.B. Kopiertabellen 44 (vgl. Fig. 3) mit erweitertem Bit 54 durch die Buskoppler-CPU 38 konfiguriert.

Eine zyklische Datenphase kann, insbesondere nach der Initialisierungsphase, beispielsweise wie folgt verlaufen.
(a) Ein Feldbus-Zyklus wird empfangen und in dem Eingangsdatenpuffer 24 des überlagerten Bussystems 10 gespeichert. Gleichzeitig zu den Daten des Eingangsdatenpuffers 24 werden die (Prozess-)Daten entsprechend der gesetzten erweiterten Bits 54 der Kopiertabelle 44 in den Anweisungsausführungspuffer 36 gespeichert.
(b) Wenn das Signal "Feldbus Cycle_OK", z.B. in einem Speicher 40, gesetzt wird, beginnt die Anweisungsausführungseinrichtung 30, die programmierten Funktionen aus den Daten des Anweisungsausführungspuffers 36, evtl. auch aus dem Ausgangsdatenpuffer 18 zu generieren und die Daten in den Manipulationsdatenpuffer 32 und/oder den Eingangsdatenpuffer 24 zu schreiben.
(c) Ist die Generierung abgeschlossen wird der Zyklus abgeschlossen und ein neuer Feldbus-Zyklus kann gestartet werden.
(d) Es wird ein Feldbus-Zyklus gestartet, wobei die Adresse des Maskenpuffers 34 und des Manipulationsdatenpuffers 32 auf Anfang gestellt werden. Aus der Kopiertabelle 44 werden die erweiterten Bits 54 ausgelesen, um (Prozess-)Daten aus dem Ausgangsdatenpuffer 18 zu holen. Ist das erweiterte Bit 54 nicht gesetzt, werden die Daten unverändert durch die

Datenmanipulationseinrichtung 20 an den FeldbusMaster 22 gegeben, d.h. es werden die Daten über die Kanäle 16a und 16b unverändert von dem ersten Bus 10 zu dem zweiten Bus 14 übertragen. Ist das erweiterte Bit gesetzt, werden die Bits aus dem Ausgangsdatenpuffer 18 in der Datenmanipulationseinrichtung 20 verändert. Dabei gibt der Inhalt des Maskenpuffers 34 an, welche Bits verändert werden sollen, wobei z.B. "1" für eine Veränderung stehen kann. Der einzutragende Wert steht in dem Manipulationsdatenpuffers 32. Ist ein Eintrag des Maskenpuffers 34 und des Manipulationsdatenpuffers 32 abgearbeitet, wird auf das nächste Datum umgeschaltet.

Zur Schonung der FPGA-Ressourcen wird die Kopiertabelle 44 um ein erweitertes Bit 54 erweitert, welches angibt, dass ein jeweiliges Byte zu den App-Funktionen herangezogen werden soll. Mit anderen Worten werden z.B. nur wenn das erweiterte Bit 54 gesetzt ist die Daten in den Anweisungsausführungspuffers 36 geschrieben und die Daten aus dem Manipulationsdatenpuffer 32 und dem Maskenpuffer 34 durch die Datenmanipulationseinrichtung 20 verarbeitet.

In der beispielhaften Ausführungsform der Fig. 2 manipuliert die Datenmanipulationseinrichtung 20 lediglich Daten in Vorwärtsrichtung. Daten in Rückwärtsrichtung können in diesem Beispiel von der Anweisungsausführungseinrichtung 30 manipuliert werden, indem Daten in den Eingangsdatenpuffer 24 geschrieben werden.

Bezugnehmend auf Fig. 3 ist eine beispielhafte Kopiertabelle 44 gezeigt, welche insbesondere eine Umsortierreihenfolge definiert, um z.B. Daten, welche in einer ersten Datenanordnung 46 vorliegen, in eine zweite Datenanordnung 48 umzusortieren. Die erste Datenanordnung 46 kann sich z.B. auf das erste Bussystem 10 beziehen, während sich die zweite Datenanordnung 48 auf das zweite Bussystem 14 beziehen kann.

Mittels Adressen 50 können die Speicherbereiche 52 der Kopiertabelle 44 jeweils adressiert werden. Die Speicherbereiche 52 der Kopiertabelle 44 sind insbesondere vorgesehen, Adressen aufzunehmen, welche sich auf Adressen 56 der ersten Datenanordnung 46 beziehen. Die Daten 58 der ersten Datenanordnung 46 können demnach z.B. in einer Reihenfolge 60 als Daten 62 zur Ausgabe gebracht werden.

Die Kopiertabelle 44 umfasst in diesem Beispiel zudem ein erweitertes Bit 54, welches angibt, ob beispielsweise ein Datum der ersten Datenanordnung zu modifizieren ist. Ist das erweiterte Bit gesetzt, d.h. weist es den Wert "1" auf, kann das entsprechende Datum 58 modifiziert werden, bevor es zur Ausgabe gebracht wird. In dem dargestellten Beispiel werden die Daten "Data 2 Device 1", "Data 2 Device 2" und "Data 2 Device 3" der ersten Datenanordnung 46 verändert zu den Daten "Data" 2 Device 1", "Data' 2 Device 2" und "Data' 2 Device 3" der zweiten Datenanordnung 48.

Hierdurch können folglich insbesondere auch Funktionen wie Counter-Funktionen, Reflex-Funktionen (verschiedene Eingangszustände führen zu einem bestimmten Ausgangszustand), Timestamping oder Oversampling von Prozessdaten mit Daten aus Standard-Feldbusmodulen, Event-Auswertung, Regelfunktionen, etc. realisiert werden.

Die Kopiertabelle, welche z.B. in einem RAM-Speicher abgelegt sein kann, kann auch weitere Informationen umfassen. Beispielsweise weitere erweiterte Bits vorgesehen sein. Die erweiterten Bits können z.B. den Datentyp betreffen und insbesondere angeben, wie groß das jeweilige Datum ist. Die Informationen können ferner die Byte-Position in beispielsweise einem unterlagerten Feldbusobjekt angeben.

Die vorstehend genannten Daten können durch die Übertragungseinrichtung beispielsweise auch parallel weiterverarbeitet werden. Die Kopiertabelle kann derart beschaffen sein, dass verschiedene Informationen beispielsweise mit nur einem Speicherzugriff abgeholt werden können. Der Zugriff auf die Kopiertabelle beginnt beispielsweise bei Adresse 0×0 und wird nachfolgend inkrementiert.

Die Kopiertabelle kann sich auch auf Zusatzspeicher beziehen, welche zum Speichern von Zusatzdaten vorgesehen sind und beispielsweise Management-Daten oder Statusinformationen beinhalten. Es kann dann die Datenmanipulationseinrichtung ausgebildet sein, die vorwärtsgerichteten und/oder rückwärtsgerichteten Daten mit den Zusatzdaten zu verknüpfen, um verknüpfte Daten zu erhalten und die verknüpften Daten dem jeweiligen Bussystem zuzuführen.

Für jedes Device eines unterlagerten Bussystems kann beispielsweise ein Management-Puffer mit Management-Bytes initialisiert sein, wobei die Kopiertabelle mit darauf sich beziehenden Adressen initialisiert wird.

## Patentansprüche

1. Vorrichtung (12) zur Kopplung eines ersten Bussystems (10) mit einem zweiten Bussystem (14), um zwischen dem ersten Bussystem und dem zweiten Bussystem bidirektional zu vermitteln, umfassend:
- eine Datenübertragungseinrichtung (16) zur Übertragung von vorwärtsgerichteten Daten von dem ersten Bussystem (10) zu dem zweiten Bussystem (14) und zur Übertragung von rückwärtsgerichteten Daten von dem zweiten Bussystem zu dem ersten Bussystem (10),
- eine Datenmanipulationseinrichtung (20) zur Manipulation von vorwärtsgerichteten Daten und/oder rückwärtsgerichteten Daten,
und **gekennzeichnet durch**
- einen Anweisungsspeicher (28) zur Speicherung von Manipulationsanweisungen, welche die Manipulation von Daten durch die Datenmanipulationseinrichtung betreffen, wobei die Manipulationsanweisungen in den Anweisungsspeicher nachladbar sind,
- einen Prozessor für das Abarbeiten üblicher Aufgaben eines Buskopplers und zusätzlich
- eine Anweisungsausführungseinrichtung (30) zur Ausführung der Manipulationsanweisungen und Erzeugung von Manipulationsdaten,
- einen Manipulationsdatenpuffer (32) zur Zwischenspeicherung erzeugter Manipulationsdaten für die Datenmanipulationseinrichtung,
- wobei die Manipulationsanweisungen modulartig in den Anweisungsspeicher nachladbar, benutzerseitig nachladbar, benutzerseitig veränderbar, durch einen Update-Mechanismus aktualisierbar, nachträglich austauschbar und/oder als nachladbare Funktionen ausgebildet sind,
- wobei die Manipulationsanweisungen auf vorwärtsgerichtete und/oder rückwärtsgerichtete Daten sich beziehen und wobei die Anweisungsausführungseinrichtung eingerichtet ist, auf vorwärtsgerichtete und/oder rückwärtsgerichtete Daten zuzugreifen, um die auf diese Daten sich beziehenden Manipulationsanweisungen auszuführen,
- wobei die Datenmanipulationseinrichtung ausgebildet ist, die im Manipulationsdatenpuffer zwischengespeicherten Manipulationsdaten mit vorwärtsgerichteten und/oder rückwärtsgerichteten Daten zu verknüpfen.

2. Vorrichtung zur Kopplung eines ersten Bussystems (10) mit einem zweiten Bussystem (14) nach Anspruch 1,
- wobei die Datenmanipulationseinrichtung (20) ausgebildet ist, zumindest Teile vorwärtsgerichteter und/oder rückwärtsgerichteter Daten mit Manipulationsdaten zu überschreiben.

3. Vorrichtung zur Kopplung eines ersten Bussystems (10) mit einem zweiten Bussystem (14) nach dem vorstehenden Anspruch, wobei die Anweisungsausführungseinrichtung (30) lediglich zur Ausführung der Manipulationsanweisungen vorgesehen ist.

4. Vorrichtung zur Kopplung eines ersten Bussystems (10) mit einem zweiten Bussystem (14) nach einem der vorstehenden Ansprüche, umfassend eine Schnittstelle, über die das flexible Nachladen von Manipulationsanweisungen möglich ist oder eine Schnittstelle, die dediziert für das flexible Nachladen von Manipulationsanweisungen vorgesehen ist.

5. Vorrichtung zur Kopplung eines ersten Bussystems (10) mit einem zweiten Bussystem (14) nach einem der vorstehenden Ansprüche umfassend:
- einen dem ersten Bussystem (10) zugeordneten Ausgangsdatenpuffer zur Zwischenspeicherung von vorwärtsgerichteten Daten und
- einem dem ersten Bussystem (10) zugeordneten Eingangsdatenpuffer zur Zwischenspeicherung von rückwärtsgerichteten Daten,
- wobei die Datenübertragungseinrichtung (16) und/oder die Datenmanipulationseinrichtung (20) ausgebildet ist, auf den Ausgangspuffer und/oder den Eingangspuffer zuzugreifen, um vorwärtsgerichtete und/oder rückwärtsgerichtete Daten zu übertragen bzw. zu manipulieren.

6. Vorrichtung zur Kopplung eines ersten Bussystems mit einem zweiten Bussystem (14) nach dem vorstehenden Anspruch, wobei die Anweisungsausführungseinrichtung ausgebildet ist, auf den Ausgangspuffer und/oder den Eingangspuffer zuzugreifen, um auf vorwärtsgerichtete Daten sich beziehende Manipulationsanweisungen auszuführen bzw. Manipulationsdaten in den Eingangspuffer einzuspeisen.

7. Vorrichtung zur Kopplung eines ersten Bussystems (10) mit einem zweiten Bussystem (14) nach einem der vorstehenden Ansprüche, wobei
- die Datenmanipulationseinrichtung ausgebildet ist, Manipulationsdaten mit vorwärtsgerichteten oder rückwärtsgerichteten Daten derart zu verknüpfen, dass diese Manipulationsdaten von dem zweiten bzw. ersten Bussystem zunächst unmanipuliert übertragen werden und zu einem späteren Zeitpunkt als manipulierte rückwärtsgerichtete bzw. vorwärtsgerichtete Daten für das erste bzw. zweite Bussystem wiederkehren.

8. Vorrichtung zur Kopplung eines ersten Bussystems (10) mit einem zweiten Bussystem (14) nach einem der vorstehenden Ansprüche,
- umfassend eine Kopiertabelle zum Bereitstellen einer Umsortierreihenfolge für vorwärtsgerichtete und/oder rückwärtsgerichtete Daten, und/oder
- wobei die Übertragungseinrichtung ausgebildet ist, vorwärtsgerichtete Daten, insbesondere aus dem Ausgangsdatenpuffer, gemäß der Umsortierreihenfolge umzusortieren und an das zweite Bussystem zu übertragen, und/oder wobei die Übertragungseinrichtung ausgebildet ist, rückwärtsgerichtete Daten gemäß der Umsortierreihenfolge umzusortieren und an das erste Bussystem, insbesondere an den Eingangsdatenpuffer, zu übertragen, und/oder
- wobei die Kopiertabelle erweiterte Informationen umfasst, insbesondere ein erweitertes Bit, welches angibt, ob ein jeweiliges Datum durch die Datenmanipulationseinrichtung zu manipulieren ist.

9. Vorrichtung zur Kopplung eines ersten Bussystems (10) mit einem zweiten Bussystem (14) nach einem der vorstehenden Ansprüche umfassend einen Anweisungsausführungspuffer zur Zwischenspeicherung von Daten, welche gemäß einem erweiterten Bit zu manipulieren sind.

10. Vorrichtung zur Kopplung eines ersten Bussystems (10) mit einem zweiten Bussystem (14) nach dem vorstehenden Anspruch, wobei die Anweisungsausführungseinrichtung (30) ausgebildet ist, auf den Anweisungsausführungspuffer zuzugreifen.

11. Vorrichtung zur Kopplung eines ersten Bussystems mit einem zweiten Bussystem nach Anspruch 8, wobei
ein Prozessor umfasst ist, welcher ausgebildet ist, die Kopiertabelle mit der Umsortierreihenfolge und mit erweiterten Informationen, falls die Kopiertabelle erweiterte Informationen umfasst, zu initialisieren,
und/oder
wobei die Anweisungsausführungseinrichtung (30) die Kopiertabelle abarbeitet, insbesondere nachdem ein Zyklus des ersten und/oder zweiten Bussystems vollendet ist.

12. Vorrichtung zur Kopplung eines ersten Bussystems (10) mit einem zweiten Bussystem (14) nach einem der vorstehenden Ansprüche umfassend einen Maskenpuffer zur Speicherung einer Bitmaske, welche angibt, welche Teile vorwärtsgerichteter und/oder rückwärtsgerichteter Daten von der Datenmanipulationseinrichtung zu manipulieren sind.

13. Vorrichtung zur Kopplung eines ersten Bussystems (10) mit einem zweiten Bussystem (14) nach einem der vorstehenden Ansprüche umfassend einen Prozessor, welcher ausgebildet ist, die Kopiertabelle mit der Umsortierreihenfolge und mit erweiterten Informationen, falls die Kopiertabelle erweiterte Informationen umfasst, zu initialisieren.

14. Verfahren zur Kopplung eines ersten Bussystems (10) mit einem zweiten Bussystem (14), um zwischen dem ersten Bussystem (10) und dem zweiten Bussystem (14) bidirektional zu vermitteln, umfassend folgende Schritte:
- Nachladen von Manipulationsanweisungen in einen Anweisungsspeicher (28),
- Speicherung der Manipulationsanweisungen in dem Anweisungsspeicher (28), wobei die Manipulationsanweisungen sich auf vorwärtsgerichtete und/oder rückwärtsgerichtete Daten beziehen,
- Übertragung von Daten zwischen dem ersten (10) und dem zweiten Bussystem (14) mittels einer Datenübertragungseinrichtung,
- Zugreifen auf vorwärtsgerichtete und/oder rückwärtsgerichtete Daten und Ausführen der sich auf diese Daten beziehenden Manipulationsanweisungen mittels einer Anweisungsausführungseinrichtung,
- Manipulation von Daten gemäß den Manipulationsanweisungen mittels einer Datenmanipulationseinrichtung.

15. Computer-Programm zum Durchführen des Verfahrens gemäß Anspruch 14, wenn das Computer-Programm auf einem Computer abläuft.

## Claims

1. Device (12) for coupling a first bus system (10) with a second bus system (14) for bidirectional communication between the first bus system and the second bus system, comprising
- a data transmission device (16) for transmission of forward-directed data from the first bus system (10) to the second bus system (14) and for transmitting backward-directed data from the second bus system to the first bus system (10),
- a data manipulation device (20) for the manipulation of forward-directed data and/or backward-directed data,
and **characterized by**
- an instruction memory (28) for storing manipulation instructions which allow the manipulation of data by the data manipulation device, wherein the manipulation instructions are reloadable into the instruction memory,
- a processor for performing common tasks of a bus coupler and in addition
- an instruction execution device (30 ) for executing the manipulation instructions and generation of manipulation data,
- a manipulation data buffer (32) for the intermediate storage of generated manipulation data for the data manipulation device,
wherein the manipulation instructions are modularly reloadable into the instruction memory, are reloadable by the user, are changeable by the user, are actualisable by an update mechanism, are subsequently replaceable and/or are designed as reloadable functions,
- wherein the manipulation instructions refer to forward-directed and/or backward-directed data and wherein the instruction execution device is set up to access forward-directed and/or backward-directed data in order to execute the manipulation instructions relating to this data,
- wherein said data manipulation device is adapted to link the manipulation data intermediately stored in the manipulation data buffer with the forward-directed data and/or backward-directed data.

2. Device for coupling a first bus system (10) with a second bus system according to claim 1, wherein the data manipulation device (20) is designed to overwrite at least parts of forward-directed and/or backward-directed data with manipulation data.

3. Device for coupling a first bus system (10) with a second bus system (14) according to the preceding claim, wherein the instruction execution device (30) being provided only for executing the manipulation instructions.

4. Device for coupling a first bus system (10) with a second bus system (14) according to any one of the preceding claims, comprising an interface via which flexible reloading of manipulation instructions is possible or an interface dedicated for flexible reloading of manipulation instructions.

5. Apparatus for coupling a first bus system (10) with a second bus system (14) according to any one of the preceding claims comprising:
- an output data buffer associated with the first bus system (10) for buffering forward-directed data, and - an input data buffer associated with the first bus system (10) for buffering backward-directed data,
- wherein the data transmission device (16) and/or the data manipulation device (20) are designed access the output buffer and/or the input buffer in order to transfer or manipulate forward-directed and/or backward-directed data.

6. Device for coupling a first bus system with a second bus system (1 4 ) according to the preceding claim, wherein the instruction execution device is adapted to access the output buffer and/or the input buffer to execute manipulation instructions relating to forward-directed data and to feed manipulation data into the input buffer, respectively.

7. Device for coupling a first bus system (10) with a second bus system (14) according to any one of the preceding claims, wherein the data manipulation device is designed to link manipulation data to forward-directed or backward-directed data in such a way that these manipulation data are initially transmitted unmanipulated by the second or first bus system and return at a later time as manipulated backward-directed or forward-directed data for the first or second bus system.

8. Device for coupling a first bus system (10) with a second bus system (14) according to any one of the preceding claims, comprising a copy table for providing a rearranging sequence for forward-directed and/or backward-directed data, and/or
- wherein the transmission device is designed to rearrange forward-directed data, in particular from the output data buffer, according to the rearranging sequence and to transmit it to the second bus system, and/or wherein the transmission device is designed to rearrange backward-directed data according to the rearranging sequence and to transmit it to the first bus system in particular to the input data buffer, and/or
- wherein the copy table comprises extended information, in particular an extended bit indicating whether a respective data is to be manipulated by the data manipulation device.

9. Device for coupling a first bus system (10) with a second bus system (14) according to any of the preceding claims comprising an instruction execution buffer for the intermediate storage of data to be manipulated according to an extended bit.

10. Device for coupling a first bus system (10) with a second bus system (14) according to the preceding claim, wherein the instruction execution device (30) is adapted to access the instruction instruction execution buffer.

11. Device for coupling a first bus system with a second bus system according to claim 8,
wherein a processor is comprised which is adapted to initialize the copy table with the rearranging sequence and with extended information, if the copy table comprises extended information, and/or wherein the instruction execution device (30) processes the copy table, in particular after a cycle of the first and/or second bus system is completed.

12. Device for coupling a first bus system (10) with a second bus system (14) according to any one of the preceding claims, comprising a mask buffer for storing a bit mask indicating which portions of forward-directed and/or backward-directed data are to be manipulated by the data manipulation device.

13. Device for coupling a first bus system (10) with a second bus system (14) according to any one of the preceding claims, comprising a processor configured to initialize the copy table with the rearranging sequence and with extended information, if the copy table comprises extended information.

14. Method for coupling a first bus system (10) with a second bus system (14) to bi-directionally communicate between the first bus system (10) and the second bus system (14), comprising the steps of:
- Reloading manipulation instructions into an instruction memory (28),
- storing the manipulation instructions in the instruction memory (28), wherein the manipulation instructions relate to forward-directed and/or backward-directed data,
- transferring data between the first (10) and the second bus system (14) by means of a data transfer device,
- accessing forward-directed and/or backward-directed data and executing the manipulation instructions relating to this data by means of instruction execution device,
- manipulating data in accordance with the manipulation instructions by means of data manipulation device.

15. A computer program for performing the method of claim 14 when the computer program runs on a computer

## Revendications

1. Dispositif (12) pour le couplage d'un premier système de bus (10) à un deuxième système de bus (14), afin d'établir une communication bidirectionnelle entre le premier système de bus et le deuxième système de bus, comprenant :
- un équipement de transmission de données (16) pour la transmission de données aller du premier système de bus (10) au deuxième système de bus (14) et pour la transmission de données retour du deuxième système de bus au premier système de bus (10),
- un équipement de manipulation de données (20) pour la manipulation de données aller et/ou données retour,
et **caractérisé par**
- une mémoire d'instructions (28) pour la mise en mémoire d'instructions de manipulation, lesquelles concernent la manipulation de données par l'équipement de manipulation de données, où les instructions de manipulation peuvent être téléchargées dans la mémoire d'instructions,
- un processeur pour le traitement de tâches habituelles d'un coupleur de bus et en plus
- un équipement d'exécution d'instructions (30) pour l'exécution des instructions de manipulation et la génération de données de manipulation,
- un tampon de données de manipulation (32) pour la mise en mémoire intermédiaire de données de manipulation générées pour le système de manipulation de données,
- dans lequel les instructions de manipulation peuvent être téléchargées de façon modulaire dans la mémoire d'instructions, peuvent être téléchargées côté utilisateur, peuvent être modifiées côté utilisateur, peuvent être actualisées par un mécanisme de mise à jour, peuvent être échangées ultérieurement et/ou sont réalisées sous la forme de fonctions téléchargeables,
- dans lequel les instructions de manipulation se réfèrent aux données aller et/ou retour et où l'équipement d'exécution d'instructions est conçu pour accéder aux données aller et/ou retour, afin d'exécuter les instructions de manipulation se référant à ces données,
- dans lequel l'équipement de manipulation de données est réalisé pour combiner les données de manipulation mises en mémoire de manière intermédiaire dans le tampon de données de manipulation aux données aller et/ou retour.

2. Dispositif pour le couplage d'un premier système de bus (10) à un deuxième système de bus (14) selon la revendication 1,
- dans lequel l'équipement de manipulation de données (20) est réalisé pour écraser au moins des parties de données aller et/ou retour avec des données de manipulation.

3. Dispositif pour le couplage d'un premier système de bus (10) à un deuxième système de bus (14) selon la revendication précédente, dans lequel l'équipement d'exécution d'instructions (30) est prévu uniquement pour l'exécution des instructions de manipulation.

4. Dispositif pour le couplage d'un premier système de bus (10) à un deuxième système de bus (14) selon l'une quelconque des revendications précédentes, comprenant une interface, par l'intermédiaire de laquelle le téléchargement flexible d'instructions de manipulation est possible ou une interface qui est prévue de manière dédiée pour le téléchargement flexible d'instructions de manipulation.

5. Dispositif pour le couplage d'un premier système de bus (10) à un deuxième système de bus (14) selon l'une quelconque des revendications précédentes comprenant :
- un tampon de données de sortie associé au premier système de bus (10) pour la mise en mémoire intermédiaire de données aller et
- un tampon de données d'entrée associé au premier système de bus (10) pour la mise en mémoire intermédiaire de données retour,
- dans lequel l'équipement de transmission de données (16) et/ou l'équipement de manipulation de données (20) est réalisé pour accéder au tampon de sortie et/ou au tampon d'entrée, afin de transmettre ou de manipuler les données aller et/ou retour.

6. Dispositif pour le couplage d'un premier système de bus à un deuxième système de bus (14) selon la revendication précédente, dans lequel le système d'exécution d'instructions est réalisé pour accéder au tampon de sortie et/ou au tampon d'entrée, afin d'exécuter les instructions de manipulation se référant aux données aller ou d'introduire les données de manipulation dans le tampon d'entrée.

7. Dispositif pour le couplage d'un premier système de bus (10) à un deuxième système de bus (14) selon l'une quelconque des revendications précédentes,
dans lequel
- l'équipement de manipulation de données est réalisé pour combiner les données de manipulation aux données aller ou retour, de telle sorte que ces données de manipulation peuvent être transmises tout d'abord de manière non manipulée à partir du deuxième ou premier système de bus et reviennent à un moment ultérieur en tant que données retour ou aller manipulées pour le premier ou deuxième système de bus.

8. Dispositif pour le couplage d'un premier système de bus (10) à un deuxième système de bus (14) selon l'une quelconque des revendications précédentes,
- comprenant un tableau de copie pour la fourniture d'un ordre de réorganisation pour les données aller et/ou retour, et/ou
- dans lequel l'équipement de transmission est réalisé pour réorganiser les données aller, en particulier provenant du tampon de données de sortie, selon l'ordre de réorganisation et pour les transmettre au deuxième système de bus, et/ou dans lequel l'équipement de transmission est réalisé pour réorganiser les données retour selon l'ordre de réorganisation et pour les transmettre au premier système de bus, en particulier au tampon de données d'entrée, et/ou
- dans lequel le tableau de copie comprend des informations avancées, en particulier un bit avancé, lequel indique si une donnée respective doit être manipulée par l'équipement de manipulation de données.

9. Dispositif pour le couplage d'un premier système de bus (10) à un deuxième système de bus (14) selon l'une quelconque des revendications précédentes, comprenant un tampon d'exécution d'instructions pour la mise en mémoire intermédiaire de données, lesquelles doivent être manipulées selon un bit avancé.

10. Dispositif pour le couplage d'un premier système de bus (10) à un deuxième système de bus (14) selon la revendication précédente, dans lequel l'équipement d'exécution d'instructions (30) est réalisé pour accéder au tampon d'exécution d'instructions.

11. Dispositif pour le couplage d'un premier système de bus à un deuxième système de bus selon la revendication 8,
dans lequel un processeur est compris, lequel est réalisé pour initialiser le tableau de copie avec l'ordre de réorganisation et avec les informations avancées, au cas où le tableau de copie comprendrait des informations avancées,
et/ou
dans lequel l'équipement d'exécution d'instructions (30) traite le tableau de copie, en particulier après qu'un cycle du premier et/ou deuxième système de bus est achevé.

12. Dispositif pour le couplage d'un premier système de bus (10) à un deuxième système de bus (14) selon l'une quelconque des revendications précédentes, comprenant un tampon de masque pour la mise en mémoire d'un masque de bits, lequel indique quelles parties des données aller et/ou retour doivent être manipulées par l'équipement de manipulation de données.

13. Dispositif pour le couplage d'un premier système de bus (10) à un deuxième système de bus (14) selon l'une quelconque des revendications précédentes, comprenant un processeur, lequel est réalisé pour initialiser le tableau de copie avec l'ordre de réorganisation et avec des informations avancées, au cas où le tableau de copie comprendrait des informations avancées.

14. Procédé pour le couplage d'un premier système de bus (10) à un deuxième système de bus (14), afin d'établir une communication bidirectionnelle entre le premier système de bus (10) et le deuxième système de bus (14), comprenant les étapes suivantes :
- le téléchargement d'instructions de manipulation dans une mémoire d'instructions (28),
- la mise en mémoire des instructions de manipulation dans la mémoire d'instructions (28), où les instructions de manipulation se réfèrent aux données aller et/ou retour,
- la transmission de données entre le premier système de bus (10) et le deuxième système de bus (14) au moyen d'un équipement de transmission de données,
- l'accession aux données aller et/ou retour et l'exécution des instructions de manipulation se référant à ces données au moyen d'un équipement d'exécution d'instructions,
- la manipulation de données selon les instructions de manipulation au moyen d'un équipement de manipulation de données.

15. Programme informatique pour la mise en œuvre du procédé selon la revendication 14, lorsque le programme informatique s'exécute sur un ordinateur.
